# EUROPEAN PATENT APPLICATION

(11) **EP 1 219 861 A1**
(43) Date of publication of application: **03.07.2002**
(21) Application number: 01310821.2
(22) Date of filing: 21.12.2001
(51) Int. Cl.: F16G 13/02

(54) **Chain pin and method of manufacturing same**

(30) Priority: 27.12.2000 JP 2000397930; 27.12.2000 JP 2000397931
(71) Applicant: BorgWarner Automotive K.K., Nabari City, Mie Prefecture 518-0495 (JP); Nihon Calorizing Industrial Co., Ltd., Koga-gun, Shiga Prefecture (JP)
(72) Inventor: Tada, Naosumi, Nabari City, Mie Prefecture 5180425 (JP); Yoshida, Yukio, Mie 515-0045 (JP); Yoshikawa, Rihei, Inukami-gun, Shiga 522-0342 (JP); Kiyoshi, Ike, Rittou-shi, Shiga 520-3025 (JP)
(74) Representative: Lerwill, John

(57) **Abstract**

A chain pin includes a carbide layer that is principally composed of vanadium carbide, but also contains a small quantity of chromium carbide formed on the top of the steel forming the base metal of the chain pin. A boundary layer (i.e., chrome-rich layer) is formed in the boundary region between the carbide layer and the base metal. The vanadium carbide content decreases sharply and the chromium carbide content increases sharply in the boundary layer. Since the carbide layer formed on the top of the base metal consists principally of vanadium carbide, it is possible to prevent peeling from the surface of the carbide layer. Moreover, the boundary layer between the carbide layer and the base metal contains a relatively large quantity of chrome, so the bonding force between the base metal and the carbide layer is increased via the boundary layer. This prevents the carbide layer from peeling from the base metal. Thus, even at high surface pressures, it is possible to improve the wear resistance of the pin. In an alternative embodiment, the principal component of the carbide layer is selected from on or more of the following carbides: vanadium carbide, titanium carbide niobium carbide, or tungsten carbide. The method of manufacturing this chain pin, as well as a power transmission chain which uses the chain pin, is also disclosed.

## Description

### REFERENCE TO RELATED APPLICATIONS

This application claims an invention which was disclosed in Japanese application number 2000-397930, filed December 27, 2000, entitled "CHAIN PIN AND ITS MANUFACTURING METHOD" and Japanese application number 2000-397931, filed December 27, 2000, entitled "POWER TRANSMISSION CHAIN". The benefit under 35 USC§119(a) of the Japanese applications is hereby claimed, and the aforementioned applications are hereby incorporated herein by reference.

### BACKGROUND OF THE INVENTION

### FIELD OF THE INVENTION

The invention pertains to the field of transmission chains. More particularly, the invention pertains to a chain pin with improved wear resistance and a power transmission chain incorporating the chain pin.

### DESCRIPTION OF RELATED ART

Silent chains generally are constructed by laminating, in the thickness direction and in the longitudinal direction, multiple link plates, each of which has a pair of pin holes and gear teeth, and by using chain pins inserted into the pin holes to connect, in a pivotable state, each link plate. In primary drive chains and power transmission chains, of which silent chains are an example, pins wear because the links are in rolling and sliding contact around the pins during chain motion. Consequently, various methods have been proposed conventionally for the purpose of improving pin wear resistance.

For example, in unexamined Japanese Patent Publication No. 56-41370, a hardened layer consisting of a chromium carbide layer is formed on the surface of the pin material, by applying a chromizing process to the pin material. Also, in unexamined Japanese Patent Publication No. 10-169723, a hardened layer consisting of one or more carbides (e.g. chrome, titanium, vanadium, niobium) is formed on the surface of the pin material.

The inventors of the present application verified the following regarding each pin's wear resistance, after repeatedly subjecting to wear-resistance tests pins produced by forming a chromium carbide (CrC) layer on the surface of the pin material (hereinafter, chromizing pins) as well as pins manufactured by forming a vanadium carbide (VC) layer on the surface of the pin material (hereinafter, VC pins).

Tn the case of chromizing pins, in usage states in which high surface pressure is applied repeatedly, peeling occurs on the surface of the chromium carbide layer, and pin wear progresses as the peeling progresses. During high-surface-pressure operation of the VC pins, peeling occurs at the boundary surface between the vanadium carbide layer and the base metal (i.e., pin material). That is, the entire vanadium carbide layer, which is the hardened layer, peels at once. As a result, wear progression accelerates. Although chromium carbide adheres (i.e., bonds) well to the base metal, the surface pressure strength is low. On the other hand, vanadium carbide has high surface pressure strength because peeling from its surface occurs with difficulty, but adhesion to the base metal is low.

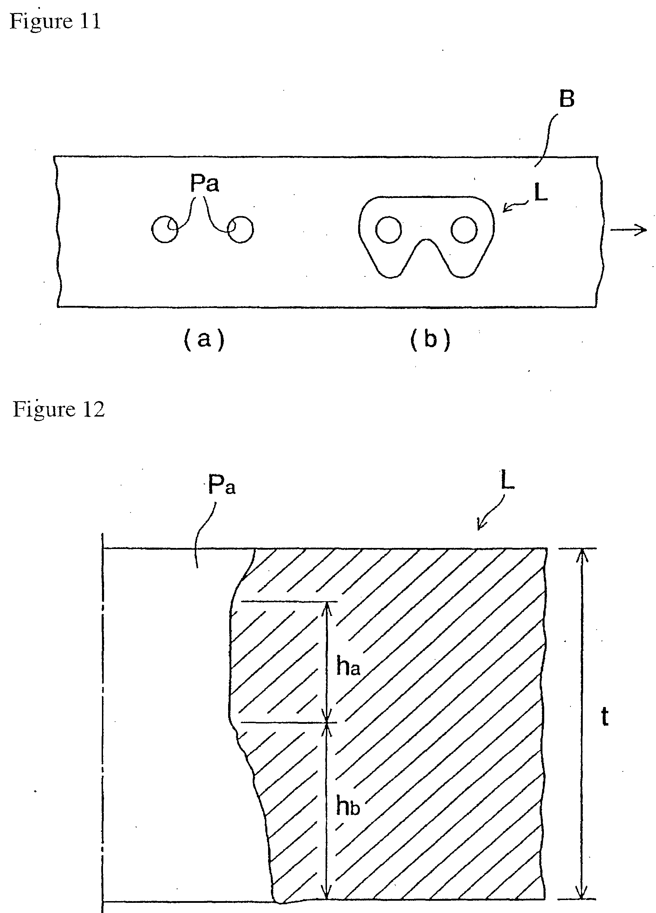

The link plate in a power transmission chain is generally subjected to punch processing by means of a punch. A typical process is shown in Fig. 11. During link plate punching, first, as shown in Fig. 11(a), pin holes Pₐ are formed by using punch to punch holes in band-shaped blank material B. Next, as shown in Fig. 11(b), another punch is used to punch the outline of the link plate L. Regarding the inner wall surface of the pin holes Pₐ of a conventional link plate L subjected to such punch processing, as shown in Fig. 12, the length hₐ of the sheared surface is only approx. 30% of the thickness t of link plate L, and cutaway h_{b} is formed in most of the area of the hole's inner wall surface. Consequently, during the operation of a silent chain formed by combining these link plates, one side of the pins contacts the pins' inner wall surfaces, thereby causing uneven wear.

Therefore, there is a need in the art for a chain pin with improved wear resistance at high surface pressures.

### SUMMARY OF THE INVENTION

A chain pin includes a carbide layer that is principally composed of vanadium carbide, but also contains a small quantity of chromium carbide formed on the top of the steel forming the base metal of the chain pin. A boundary layer (i.e., chrome-rich layer) is formed in the boundary region between the carbide layer and the base metal. The vanadium carbide content decreases sharply and the chromium carbide content increases sharply in the boundary layer. Since the carbide layer formed on the top of the base metal consists principally of vanadium carbide, it is possible to prevent peeling from the surface of the carbide layer. Moreover, the boundary layer between the carbide layer and the base metal contains a relatively large quantity of chrome, so the bonding force between the base metal and the carbide layer is increased via the boundary layer. This prevents the carbide layer from peeling from the base metal. Thus, even at high surface pressures, it is possible to improve the wear resistance of the pin. In an alternative embodiment, the principal component of the carbide layer is selected from one or more of the following carbides: vanadium carbide, titanium carbide niobium carbide, or tungsten carbide. The method of manufacturing this chain pin, as well as a power transmission chain which uses the chain pin, is also disclosed.

### BRIEF DESCRIPTION OF THE DRAWINGS

- Fig. 1: is a graph showing the composition of the chain pin in one embodiment of the present invention.
- Fig. 2: is a partial enlargement of Fig. 1.
- Fig. 3: is a graph showing the composition of a conventional chromizing pin.
- Fig. 4: is a graph showing the composition of a conventional VC pin.
- Fig. 5: is an example of a chain pin's wear test method.
- Fig. 6: shows a top schematic of a silent chain based on one embodiment of the present invention.
- Fig. 7: shows a side schematic of the silent chain of Fig. 6.
- Fig. 8: shows a process drawing used to explain the punching and machining processes for a link plate.
- Fig. 9: shows a cross-sectional enlargement of a pin hole of a link plate.
- Fig. 10: is a graph showing the wear test results for a silent chain of the present invention and a conventional silent chain.
- Fig. 11: is a process drawing used to explain punching and machining processes for a conventional link plate.
- Fig. 12: shows a cross-sectional enlargement of a pin hole of a conventional link plate.

### DETAILED DESCRIPTION OF THE INVENTION

The present invention provides a chain pin with improved wear resistance at high surface pressures. In a preferred embodiment, the chain pin includes a carbide layer containing a small quantity of chromium carbide formed on the top of the steel forming the base metal of the chain pin. Vanadium carbide is the principal component of the carbide layer. A boundary layer is formed in the boundary region between the carbide layer and the base metal. The vanadium carbide content decreases sharply and the chromium carbide content increases sharply in the boundary layer. The thickness of the carbide layer in this embodiment is preferably greater or equal to 10 µm. The thickness of the boundary layer in this embodiment is preferably less than 10 µm.

In an alternative embodiment, the chain pin is characterized by a carbide layer containing a small quantity of chromium carbide formed on the top of the steel forming the base metal of the chain pin. One or more carbides, included but not limited to vanadium carbide, titanium carbide, niobium carbide, and tungsten carbide, are the principal components of the carbide layer. A boundary layer formed in the boundary region between the carbide layer and the base metal has a content of one or more carbides, including, but not limited, to vanadium carbide, titanium carbide, niobium carbide, and tungsten carbide which decreases sharply while the chromium carbide content increases sharply. The thickness of the carbide layer in this embodiment is preferably greater or equal to 10 µm. The thickness of the boundary layer in this embodiment is preferably less than 10 µm.

Next, an embodiment of present invention will be explained with reference to the appended drawings.

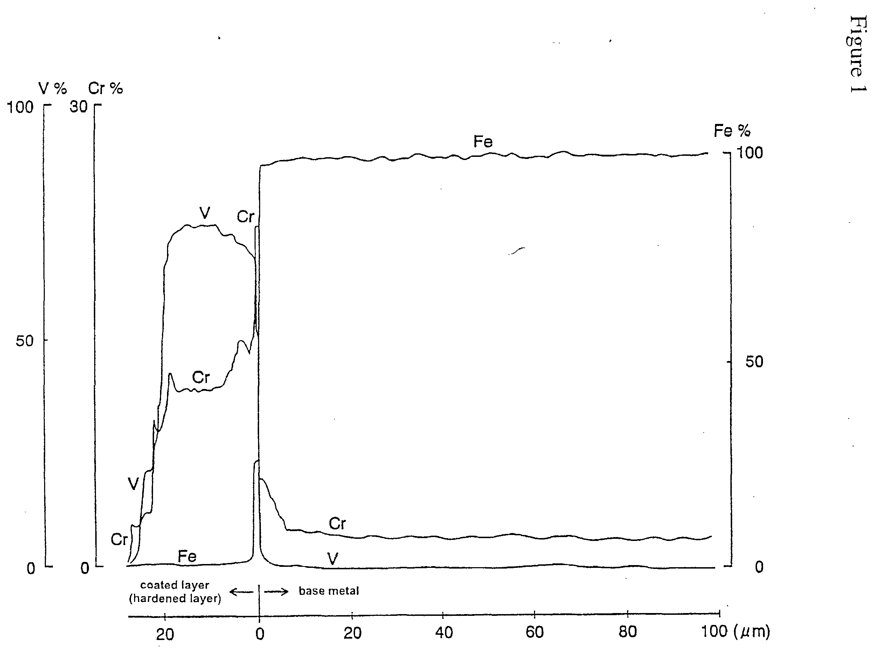

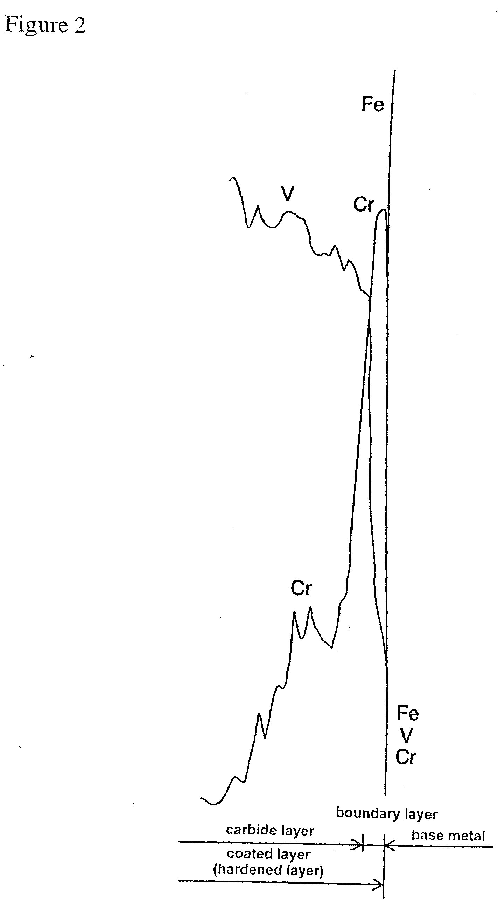

Figs. 1 to 4 show the results of elemental analysis by means of an x-ray line analysis method that utilizes a wavelength dispersion-type x-ray microanalyzer. Fig. 1 is a graph showing the chain pin composition in one embodiment of the present invention. Fig. 2 is a partial enlargement thereof.

As shown in Figs. 1 and 2, a carbide layer containing a small quantity of chromium carbide (CrₙCₘ) is formed on the top of the steel forming the base metal of a chain pin, with vanadium carbide (V₈C₇) as the principal component. Also, the ratio of vanadium and chrome atoms in this case is approximately 8.5:1.5.

As is evident in Fig. 2, a boundary layer, in which the vanadium carbide content decreases sharply and the chromium carbide content increases sharply, is formed in the boundary region between the carbide layer and the base metal. The boundary layer is a chrome-rich layer containing a comparatively large quantity of chromium carbide because, before the chrome and vanadium penetration processing in the second process, chrome penetration processing is performed in the first process. The carbide layer and boundary layer form a coating layer (i.e., hardened layer) on the base metal surface.

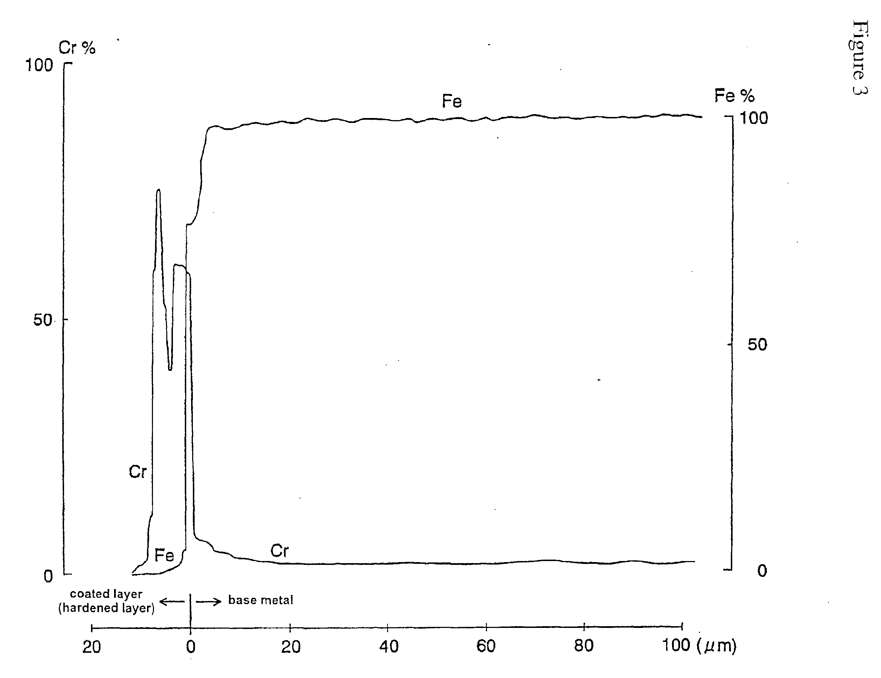

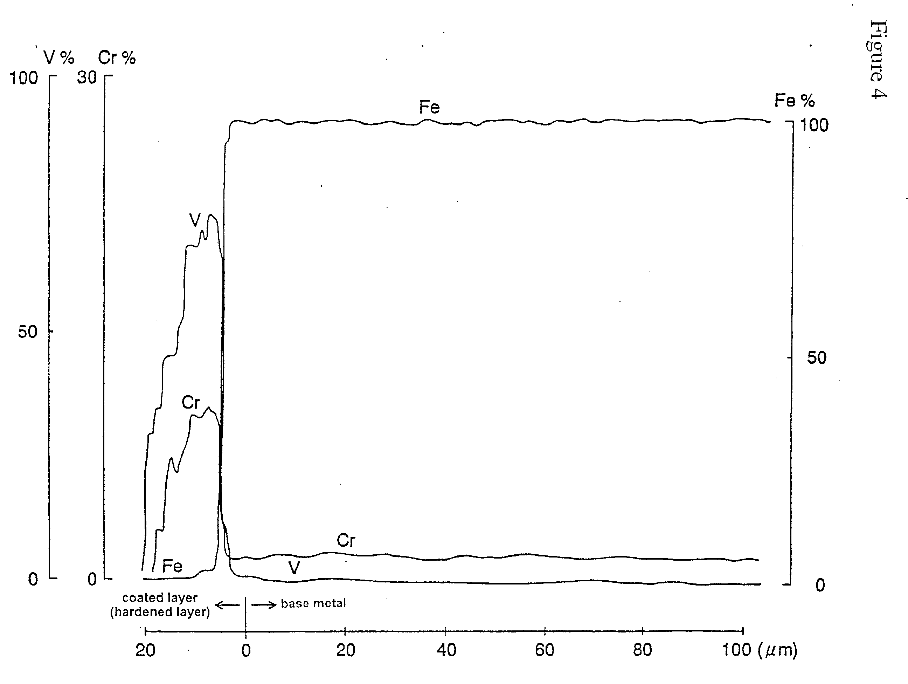

The results of elemental analyses of conventionally used chromizing pins and VC pins are shown in Figs. 3 and 4, respectively. A VC pin produced by simultaneously performing vanadium and chrome penetration processing is shown in Fig. 4. As shown in these figures, in both the conventional chromizing pins and VC pins, the chromium carbide and vanadium carbide contents both decreased sharply in the boundary region between the carbide layer and the base metal.

By contrast, in the present invention, the boundary layer between the carbide layer and the base metal, in which vanadium carbide is the principal component, becomes a chrome-rich layer in which the vanadium carbide content decreases sharply, while, conversely, the chromium carbide content increases sharply.

Table 1 compares the results of wear tests of the pin of the present embodiment with those of the VC pin of Fig. 4.

**Table 1**

| Surface Pressure (kg/mm²) | Pin of Present Invention | Conventional VC Pin |
|---|---|---|
| 40 | No peeling | No peeling |
| 70 | No peeling | Peeling |
| 100 | No peeling | Peeling |

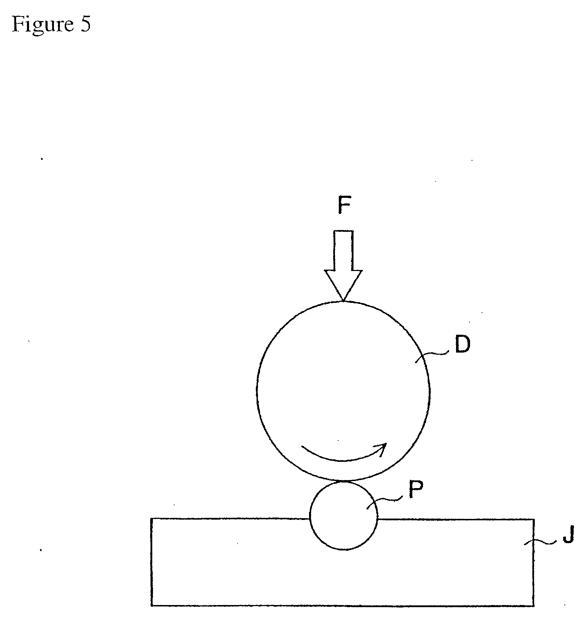

The wear test method used here is shown in Fig. 5. With the test piece, pin P, fixed in jig J, disk D that rotates at the specified rotational frequency is pressed against pin P with the specified applied force F, in order to check for check for hardened layer peeling. As shown in Table 1, the hardened layer of the chain pin of the present invention did not peel, even at high surface pressures (70 kg/mm², 100 kg/mm²). In the case of the VC pin, however, peeling occurred at 70 kg/mm². This confirms that the pin of the present invention has superior wear resistance.

The increase in wear resistance seen in the present invention is due to the following factors. First, because the carbide layer, which consists principally of vanadium carbide, a compound with high surface pressure strength, is formed on the top of the base metal, it is difficult for carbide layer surface peeling to occur, even at high surface pressures. Consequently, the pin's wear resistance improved. Also, since a chrome-rich layer that contains a comparatively large quantity of chromium carbide, which adheres (i.e., bonds) readily to vanadium carbide and the base metal, is formed in the boundary layer between the carbide layer and the base metal, it is difficult for the carbide layer to peel from the base metal, even at high surface pressures.

In contrast, although a vanadium carbide layer with high surface pressure strength is formed on the top of the base metal of the VC pin in Fig. 4, the content of the chromium carbide layer, which adheres readily to the base metal, decreases sharply in the boundary region between the vanadium carbide layer and the base metal. So, at high surface pressures, the vanadium carbide layer tends to peel readily from the base metal. As a result, the pin's wear resistance decreases.

In a preferred embodiment, the carbide layer thickness is preferably on the order of 10 µm or more, and the boundary layer thickness is preferably on the order of several µm, but preferably less than 10 µm. A carbide layer thickness of 10 µm or more prevents fatigue failure of the boundary layer (i.e., the bottom layer of the carbide layer) at high surface pressures. A boundary layer thickness of several µm or more is sufficient to prevent the carbide layer from peeling from the base metal.

Although an example in which a mixed layer of vanadium carbide and chromium carbide was formed on the top of the steel forming the base metal of the pin is described herein, applications of the present invention are not limited thereto. Instead of vanadium carbide, titanium carbide, niobium carbide or tungsten carbide may be used. Alternatively, instead of vanadium carbide, two or more of the following carbides may be used: vanadium carbide, titanium carbide, niobium carbide, and tungsten carbide.

### Manufacturing the Chain Pin

The method of manufacturing the chain pin is characterized in that a chromium carbide layer is formed by subjecting the surface of the steel that forms the base metal of a chain pin to a chrome penetration and diffusion process. A mixed layer of vanadium carbide and chromium carbide is then formed on the chromium carbide layer. The mixed layer contains more vanadium than chrome and is thicker than the chromium carbide layer. This mixed layer is formed using chrome and vanadium penetration and diffusion processes, at a temperature above that of the chrome penetration and diffusion process. In a preferred embodiment, the chrome penetration and diffusion process is performed at 800-900°C, and the chrome and vanadium penetration and diffusion processes are performed at 900-1000 °C.

The chain pin of the present embodiment is preferably manufactured as follows. In the first step, the steel (e.g., bearing steel, machine structural carbon steel) that forms the base metal of the chain pin is subjected to a chrome penetration process at a temperature preferably within the range of 800-900 °C. This forms a thin (on the order of several µm) chromium carbide layer on the steel surface.

In the second step, chrome and vanadium penetration processing are performed at a temperature preferably within the range of 900-1000 °C, in order to form a mixed layer of vanadium carbide and chromium carbide on the top of the steel (i.e., on the chromium carbide layer formed in the first step). During the formation of this mixed layer, a vanadium carbide layer gradually penetrates into the chromium carbide layer formed in the first step. Also, this chrome and vanadium penetration processing is performed for a longer period than the chrome penetration processing in the first step. As a result, a carbide layer that contains more vanadium than chrome and that is thicker than the chromium carbide layer is formed on the steel surface.

Also, prior to the chrome and vanadium penetration processing of the second step, chrome penetration processing is performed in the first step, so a chrome-rich layer containing a relatively large quantity of chromium carbide is formed in the boundary region between the steel and the mixed layer of vanadium carbide and chromium carbide, which was formed on the top of the steel.

Although an example in which a mixed layer of vanadium carbide and chromium carbide was formed on the top of the steel forming the base metal of the pin is described herein, applications of the present invention are not limited thereto. Instead of vanadium carbide, titanium carbide, niobium carbide or tungsten carbide may be used. Alternatively, instead of vanadium carbide, two or more of the following carbides may be used: vanadium carbide, titanium carbide, niobium carbide, and tungsten carbide.

As explained previously, manufacture of the chain pin of the present invention results in a chain pin with a carbide layer that consists principally of vanadium carbide and contains a small quantity of chromium carbide formed on the top of the base metal, and a boundary layer formed at the boundary region between the carbide layer and the base metal, such that the vanadium carbide content decreases sharply and the chromium carbide content increases sharply in the boundary layer. This chain pin has improved wear resistance, even at high surface pressures.

### Power Transmission Chain

In a preferred embodiment, a power transmission chain has multiple link plates laminated in the thickness direction and in the longitudinal direction. Each link plate has a pair of pin holes and gear teeth. Chain pins are inserted into the pin holes and used to connect the link plates in a pivotable state. Shaving processing is performed in the pin holes of the link plates. In this context, "shaving" refers to a processing method that improves the surface roughness of a punched surface by shaving off the sags and rough surfaces produced on the punched surface when punching with a punch, by cutting the punched surface of the blank material by using a shaving metal mold slightly larger than the punched part formed by punching the blank material with a punch.

Furthermore, a carbide layer that contains vanadium carbide as the principal component, but also contains a small quantity of chromium carbide, is formed on the top of the steel forming the base metal of the chain pins. A boundary layer is formed in the boundary region between the carbide layer and the base metal such that the vanadium carbide content decreases sharply and the chromium carbide content increases sharply in the boundary layer. In a preferred embodiment, the thickness of the carbide layer of the chain pin is at least 10 µm. In another preferred embodiment, the thickness of the boundary layer of the chain pin is less than 10 µm.

In an alternative embodiment, the pin holes of the link plates in the power transmission chain are subjected to shaving processing. A carbide layer that contains, as the principal component(s), one or more carbides (vanadium carbide, titanium carbide, niobium carbide, tungsten carbide) and also contains a small quantity of chromium carbide, is formed on the top of the steel forming the base metal of the chain pins. A boundary layer is formed in the boundary region between the carbide layer and the base metal. The content of one or more carbides (vanadium carbide, titanium carbide, niobium carbide, tungsten carbide) decrease sharply and the chromium carbide content increases sharply in the boundary layer. In a preferred embodiment, the thickness of the carbide layer of the chain pin is at least 10 µm. In another preferred embodiment, the thickness of the boundary layer of the chain pin is less than 10 µm.

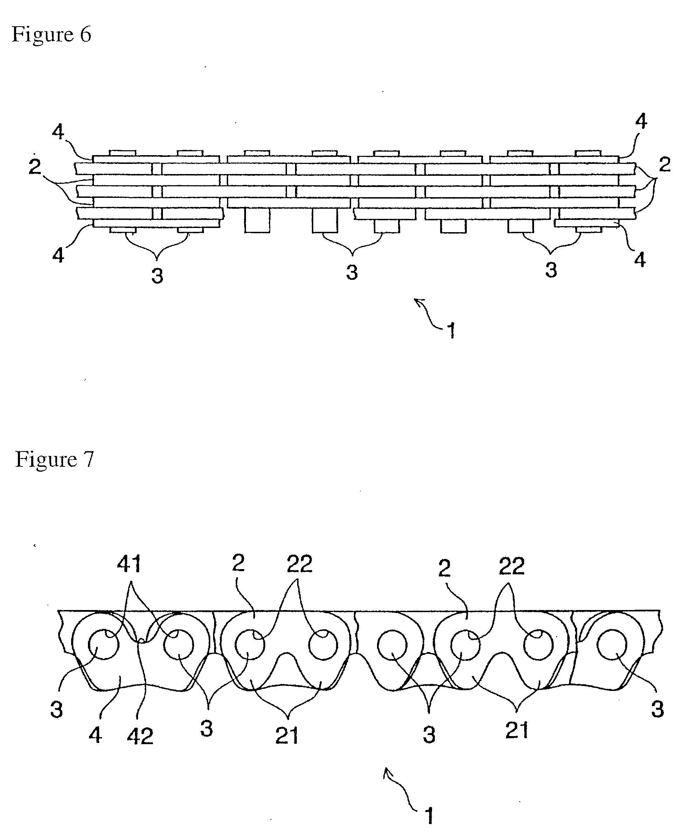

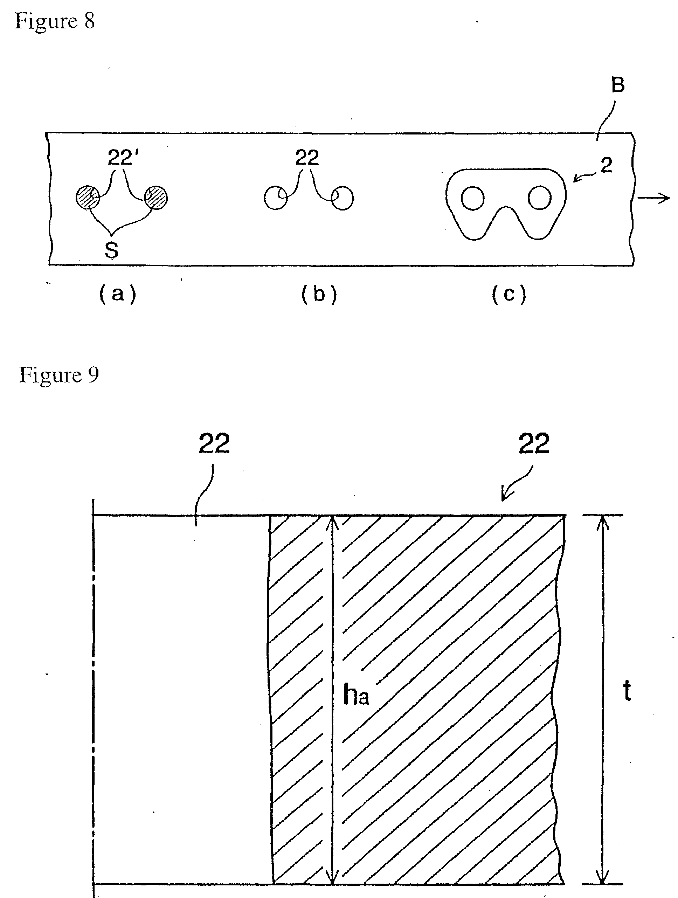

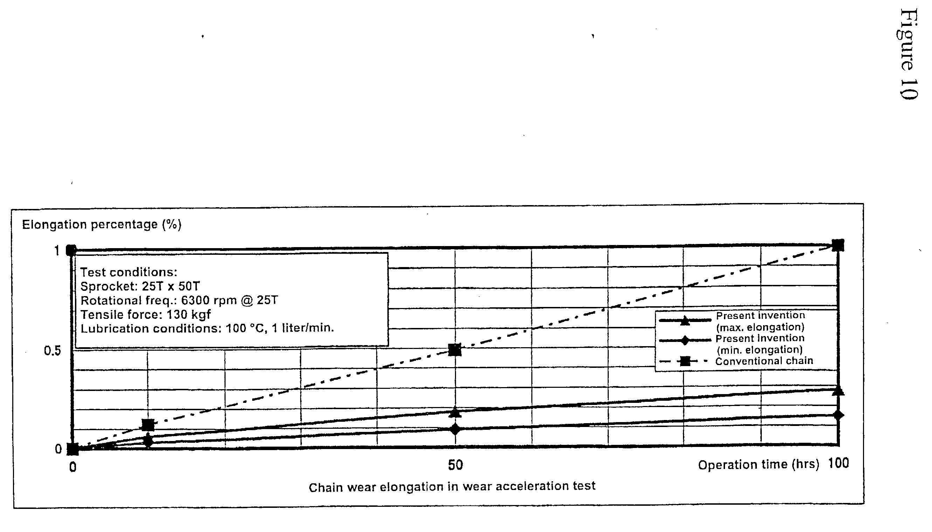

Referring now to Figs. 6-12, Fig. 6 is the top schematic of a silent chain (1) based on one embodiment of the present invention. Fig. 7 is its side schematic. Fig. 8 is the process drawing used to explain the press machining process used for the link plates (2). Fig. 9 is a cross-sectional enlargement of a pin hole of a link plate. Fig. 10 is a graph that compares the wear test results for the silent chain of the present invention with those of a conventional silent chain.

In a silent chain (1), pin holes (22) of link plates (2) are subjected to shaving processing. Also, a carbide layer that consists principally of vanadium carbide but also contains a small quantity of chromium carbide is formed on the top of the steel forming the base metal of chain pin (3). A boundary layer in which the vanadium carbide content decreases sharply and the chromium carbide content increases sharply is formed in the boundary region between the carbide layer and the base metal. In this case, the pin hole shaving process is used to prevent one-sided contact between the pin holes and the chain pins. Also, the carbide layer formed on the top of the base metal consists principally of vanadium carbide, so it is possible to prevent peeling from the surface of the carbide layer. The boundary layer between the carbide layer and the base metal contains a relatively large quantity of chrome, so the bonding between the base metal and the carbide layer improves. This prevents the peeling of the carbide layer from the base metal.

As shown in Figs. 6 and 7, silent chain (1) is constructed by laminating, in the thickness direction and in the longitudinal direction, multiple link plates (2). Each of the link plates (2) has a pair of gear teeth (21) and pin holes (22). Chain pins (3) are inserted into each pin hole (22) to connect each link plate (2) in a pivotable state. Guide link (4) is disposed on the outermost side of link plate (2), and the edge of chain pin (3) is fixed within pin hole (41) of guide link (4). Furthermore, here, a so-called low-rigidity guide with crotch (42) formed on its back is used as an example guide link.

The punch machining process for link plate (2) is explained with reference to Fig. 8. As shown in the figure, while the blank material B is moved to successive machining positions by transporting it in the direction of the arrow, first the diagonal-line areas are punched in the first process (a), to open holes (22') that will form the pair of pin holes of the link plate. Moreover, the diagonal-line areas indicate the parts to be scrapped.

In the second process (b) following the first process (a), a shaving metal mold is used to shave holes (22'). In this manner, the inner circumferences of holes (22') are shaved, thereby forming pin holes (22) with inside diameters slightly larger than those of holes (22'). As discussed above, "shaving" refers to a processing method that improves the surface roughness of a punched surface by shaving off the sags and rough surfaces produced on the punched surface when punching with a punch, by cutting the punched surface of the blank material by using a shaving metal mold slightly larger than the punched part formed by punching the blank material with a punch.

After shaving processing, the outline of the link plate is punched out in order to remove the link plate from the blank material B. In this manner, as shown in Fig. 9, sheared surface hₐ is formed over almost the entire plate thickness t of link plate L, on the inner wall of pin hole (22) of shaved link plate (2). As a result, the pin hole flatness is improved.

The results of a wear test of silent chain (1) that combines link plates (2) and chain pins (3) are shown in Fig. 10. In this wear test, a test chain was wound around a 25-tooth drive sprocket and a 50-tooth driven sprocket, thereby exerting a 130-kgf tensile force on the test chain, and 100-°C lubricating oil was supplied at 1000 cc/min. In this state, the drive sprocket was rotated at 2500 rpm, and the chain wear elongation were measured after 10 hr., 50 hr., and 100 hr. of operation. The wear elongation of the chains with maximum and minimum elongation are plotted in Fig. 10. The results of a similar wear test of a conventional silent chain that lacks a carbide layer are shown for comparison.

As is evident from Fig. 10, the wear elongation after 100 hr. is within the range of 0.15%-0.28% for the chain of the present invention. In contrast, the wear elongation of a conventional chain after 100 hr. was 1.00%. Thus, compared with a conventional chain, the chain of the present invention had significantly lower wear elongation, so the chain's wear resistance improved. The reasons for this are as follows. As aforementioned, the pin-unit wear resistance is improved by subjecting the chain pins to a hardening process. Also, the flatness of the pin holes was improved by subjecting the pin holes of the link plates to a shaving process, one-sided contact between the pin holes and the chain pins was eliminated, thereby reducing pin hole wear.

As explained previously, the wear resistance is improved even at high surface pressures in the power transmission chain of the present invention for the following reasons. Shaving processing is performed in the pin holes of link plates, a carbide layer that consists principally of vanadium carbide and contains a small quantity of chromium carbide is formed on the steel forming the base metal of the chain pins, and a boundary layer in which the vanadium carbide content decreases sharply and the chromium carbide content increases sharply is formed at the boundary region between the carbide layer and the base metal.

Although the example described above showed a mixed layer of vanadium carbide and chromium carbide formed on the top of the steel forming the base metal of the pin, applications of the present invention are not limited thereto. Instead of vanadium carbide, titanium carbide, niobium carbide or tungsten carbide may be used. Also, instead of vanadium carbide, two or more of the following carbides may be used: vanadium carbide, titanium carbide, niobium carbide, and tungsten carbide. Furthermore, the invention is similarly applicable to a roller chain.

Accordingly, it is to be understood that the embodiments of the invention herein described are merely illustrative of the application of the principles of the invention. Reference herein to details of the illustrated embodiments is not intended to limit the scope of the claims, which themselves recite those features regarded as essential to the invention.

## Claims

1. A chain pin comprising:
a) a base metal body;
b) a carbide layer formed on top of the base metal body of the chain pin, wherein vanadium carbide is a principal component of the carbide layer and chromium carbide is a secondary component of the carbide layer; and
c) a boundary layer formed in a boundary region between the carbide layer and the base metal body, wherein the vanadium carbide content decreases sharply and the chromium carbide content increases sharply in the boundary layer.

2. A chain pin comprising:
a) a base metal body;
b) a carbide layer containing a small quantity of chromium carbide formed on a top of the base metal body of the chain pin, wherein a principal component of the carbide layer is selected from the group consisting of:
i) vanadium carbide;
ii) titanium carbide;
iii) niobium carbide; and
iv) tungsten carbide; and
c) a boundary layer formed in a boundary region between the carbide layer and the base metal body, wherein a content of at least one carbide selected from the group consisting of vanadium carbide; titanium carbide; niobium carbide; and tungsten carbide decreases sharply and the chromium carbide content increases sharply in the boundary layer.

3. The chain pin of claim 1 or 2, wherein the carbide layer is greater or equal to 10 µm in thickness.

4. The chain pin of claim 1, 2 or 3, wherein the boundary layer is less than 10 µm in thickness.

5. A method for manufacturing a chain pin comprising the steps of:
a) forming a chromium carbide layer on a base metal body of the pin by subjecting a surface of the body to a chrome penetration and diffusion process; and
b) forming, by means of a chrome and vanadium penetration and diffusion process at a temperature higher than that of the chrome penetration and diffusion process, a mixed layer of vanadium carbide and chromium carbide on the chromium carbide layer, wherein the mixed layer contains more vanadium than chrome and the mixed layer is thicker than the chromium carbide layer.

6. The method of claim 5, wherein the chrome penetration and diffusion process is performed at a temperature in the range of 800-900°C.

7. The method of claim 5 or 6, wherein the chrome and vanadium penetration and diffusion processes are performed at a temperature in the range of 900-1000°C.

8. A power transmission chain comprising:
a) a plurality of link plates, each having a pair of pin holes, wherein the link plates are laminated in a thickness direction and in a longitudinal direction, wherein shaving processing is performed in the pin holes of the link plates; and
b) a plurality of chain pins inserted into the pin holes, wherein the chain pins are used to connect the link plates such that the link plates are pivotable; wherein the chain pins comprise:
i) a base metal body;
ii) a carbide layer formed on top of the base metal body of the chain pin, wherein vanadium carbide is a principal component of the carbide layer and chromium carbide is a secondary component of the carbide layer; and
iii) a boundary layer formed in a boundary region between the carbide layer and the base metal body, wherein the vanadium carbide content decreases sharply and the chromium carbide content increases sharply in the boundary layer.

9. A power transmission chain comprising:
a) a plurality of link plates, each having a pair of pin holes, wherein the link plates are laminated in a thickness direction and in a longitudinal direction, wherein shaving processing is performed in the pin holes of the link plates; and
b) a plurality of chain pins inserted into the pin holes, wherein the chain pins are used to connect the link plates such that the link plates are pivotable; wherein the chain pins comprise:
a) a base metal body;
b) a carbide layer containing a small quantity of chromium carbide formed on a top of the base metal body of the chain pin, wherein a principal component of the carbide layer is selected from the group consisting of:
i) vanadium carbide;
ii) titanium carbide;
iii) niobium carbide; and
iv) tungsten carbide; and
c) a boundary layer formed in a boundary region between the carbide layer and the base metal body, wherein a content of at least one carbide selected from the group consisting of vanadium carbide; titanium carbide; niobium carbide; and tungsten carbide decreases sharply and the chromium carbide content increases sharply in the boundary layer.

10. The power transmission chain of claim 8 or 9, wherein the carbide layer of the chain pin is at least 10 µm in thickness.

11. The power transmission chain of claim 8, 9 or 10, wherein the boundary layer of the chain pin is less than 10 µm in thickness.
